# EUROPÄISCHE PATENTSCHRIFT

(11) **EP 0 935 546 B1**
(45) Veröffentlichungstag und Bekanntmachung des Hinweises auf die Patenterteilung: **05.02.2003**
(21) Anmeldenummer: 98945037.4
(22) Anmeldetag: 23.07.1998
(51) Int. Cl.: B60S 1/38

(54) **WISCHBLATT ZUM REINIGEN VON SCHEIBEN VON KRAFTFAHRZEUGEN**
WIPER BLADE FOR CLEANING AUTOMOBILE WINDSCREENS
ESSUIE-GLACE DESTINE AU NETTOYAGE DE VITRES DE VEHICULES AUTOMOBILES

(30) Priorität: 08.09.1997 DE 19739256
(43) Veröffentlichungstag der Anmeldung: 18.08.1999
(73) Patentinhaber: ROBERT BOSCH GMBH, 70442 Stuttgart (DE)
(72) Erfinder: MERKEL, Wilfried, D-77876 Kappelrodeck (DE); KOTLARSKI, Thomas, D-77830 Buehlertal (DE)
(86) Internationale Anmeldenummer: DE9802074
(87) Internationale Veröffentlichungsnummer: WO99012784

(56) Entgegenhaltungen:
- DE-A- 2 839 587
- DE-B- 1 028 896
- DE-B- 1 247 161

## Beschreibung

### Stand der Technik

Bei Wischblättern der im Oberbegriff des Anspruchs 1 bezeichneten Art soll das Tragelement über das gesamte vom Wischblatt bestrichene Wischfeld eine möglichst gleichmäßige Verteilung des Wischerarm ausgehenden Wischblatt-Anpreßdrucks an der Scheibe gewährleisten. Durch eine entsprechende Krümmung des unbelasteten Tragelements - also wenn das Wischblatt nicht an der Scheibe anliegt - werden die Enden der im Betrieb des Wischblatts vollständig an der Scheibe angelegten Wischleiste durch das dann gespannte Tragelement zur Scheibe belastet, auch wenn sich die Krümmungsradien von sphärisch gekrümmten Fahrzeugscheiben bei jeder Wischblattposition ändern. Die Krümmung des Wischblatts muß etwas stärker sein als die im Wischfeld an der zu wischende Scheibe stärkste Krümmung. Das Tragelement ersetzt somit die aufwendige Tragbügelkonstruktion mit zwei in der Wischleiste angeordneten Federschienen, wie sie bei herkömmlichen Wischblättern praktiziert wird (DE-A-15 05 379).

Die Erfindung geht aus von einem Wischblatt nach der Gattung des Anspruchs 1. Bei einem bekannten Wischblatt dieser Art (DE-C-10 28 896) kann das Wischblatt auf der dem Fahrtwind zugewandeten Vorderseite unter dem Aufbau eines Überdrucks von diesem untergriffen werden. Andererseits baut sich auf der von dem Fahrtwind abgewandten Rückseite ein erheblicher Unterdruck auf. Zwar verändert das im Betrieb meist eine Pendelbewegung ausführende Wischblatt seine Lage in bezug auf den anströmenden Fahrtwind ständig, doch ist auch dann stets seine eine Längsseite diesem mehr oder weniger stark zugewandt und wird deshalb auch als Vorderseite bezeichnet, während seine andere Längsseite demzufolge auch als Rückseite angesehen wird. Im Zusammenwirken dieser beiden vorerwähnten Drucke, die beide dem Wischblatt-Anpreßdruck entgegengerichtet sind, wird dieser bei höheren Fahrgeschwindigkeiten zumindest so verringert, daß kein ordnungsgemäßes Wischergebnis mehr möglich ist. Eine Verstärkung des Wischblatt-Anpreßdrucks gegen die Scheibe mag bei hohen Fahrgeschwindigkeiten zwar dieses Problem verkleinern, doch bei geringeren Fahrgeschwindigkeiten, wenn das Abhebebestreben verringert wird, erhöht sich aber die Reibung zwischen Wischblatt und Scheibe, was zu einer unerwünschten Geräuschbildung und zur unzulässig hohen Belastung der Antriebskomponenten und des Wischgummis führt. Um die erwähnten Abhebebestrebungen des Wischblatts von der Scheibe zu unterdrücken werden im Zubehörhandel sogenannte Spoiler angeboten, welche am Wischblatt-Tragbügelsystem angeordnet werden können. Dies ist bei dem in Rede stehenden Wischblatt aber nicht möglich, weil durch die Befestigung eines solchen in der Regel starren Spoilers am Tragelement dessen Flexibilität praktisch aufgehoben würde, so daß eine ordnungsgemäße Reinigung des vorgeschriebenen Wischfelds nicht mehr möglich wäre.

### Vorteile der Erfindung

Bei dem erfindungsgemäßen Wischblatt mit den kennzeichnenden Merkmalen des Anspruchs 1 wird über eine dem Fahrtwind zugewandte Anströmfläche der Windabweisleiste eine zur Scheibe gerichtete Kraftkomponente aufgebaut, welche dem Abhebebestreben der beiden Drucke entgegenwirkt und so für eine hervorragende Reinigungsqualität zumindest in dem für den Fahrzeuglenker wichtigen Bereich des vom Wischblatt überstrichenen Wischfeldes sorgt. Je nach Größe der Anströmfläche kann dieser "Hilfs-Anpreßdruck" den veränderlichen, z.B. vom Fahrzeugtyp abhängigen Forderungen angepaßt werden. Weiter ist es bei der erfindungsgemäßen Lösung von Vorteil, daß der Anpreßdruck als Funktion der Fahrgeschwindigkeit mit dieser ansteigt oder abfällt. Es wird also nur dem bei großer Geschwindigkeit auftretenden störenden Abhebebestreben ein entsprechend großer "Hilfs-Anpreßdruck" entgegengesetzt. Gleichzeitig bieten die aus den Längsnuten der Wischleiste heraustretenden Längskanten der Federschienen eine ausgezeichnete Positionierungs- und Befestigungsmöglichkeit für die Anschlußvorrichtung.

Wenn die Windabweisleiste in ihrer Längserstreckung zumindest eine bis nahe an die Längsnuten reichende Aussparung aufweist, welche zur Aufnahme von quer zur Längserstreckung angeordneten Haltemitteln für die beiden Federschienen dient, können die Haltemitteln nahe ihren Halte-Ansatzstellen wirksam werden, so daß unerwünschte Hebelwirkungen vermeidbar sind.

Zweckmäßig hat der als Windabweisleiste ausgebildete Teil der Wischleiste einen im wesentlichen dreieckigen Querschnitt, dessen überwiegend dem Fahrtwind zugewandte Seite schaufelartig gekehlt ist, wobei die zweite Seite der Windabweisleiste im wesentlichen senkrecht zur Scheibe ausgerichtet ist und die dritte Seite, zur Bildung einer kompakt bauenden Windabweisleiste, die eine von der Scheibe abliegende Nutwand für die Federschienen bildet.

Fertigungstechnische Vorteile können sich ergeben, wenn die Wischleiste im wesentlichen über ihre gesamte Längserstrekkung einen gleichbleibenden Querschnitt aufweist.

Zur Stabilisierung des Wischblatts können an dem zum Tragelement gehörenden Federschienen, mehrere über deren Längserstreckung verteilt angeordnete Haltemittel angreifen.

In diesem Zusammenhang ergeben sich bei einer Ausbildung der Anschlußvorrichtung als Haltemittel weitere montagetechnische Vorteile.

Eine besonders einfache Form der weiteren Haltemittel ergibt sich, wenn diese als Klammern ausgebildet sind, welche mit Endkrallen die Federschienen an den voneinander abgewandten Längskanten umgreifen.

An den beiden Enden des Wischblatts ergibt sich eine montagefreundliche Möglichkeit der Haltemittel, wenn die Federschienen mit ihren Endabschnitten freiliegen und wenn weiter an diesen Endabschnitten klammerartige Haltemittel angreifen.

Weitere vorteilhafte Weiterbildungen und Ausgestaltungen der Erfindung sind in der nachfolgenden Beschreibung eines in der dazu gehörigen Zeichnung dargestellten Ausführungsbeispiels angegeben.

### Zeichnung

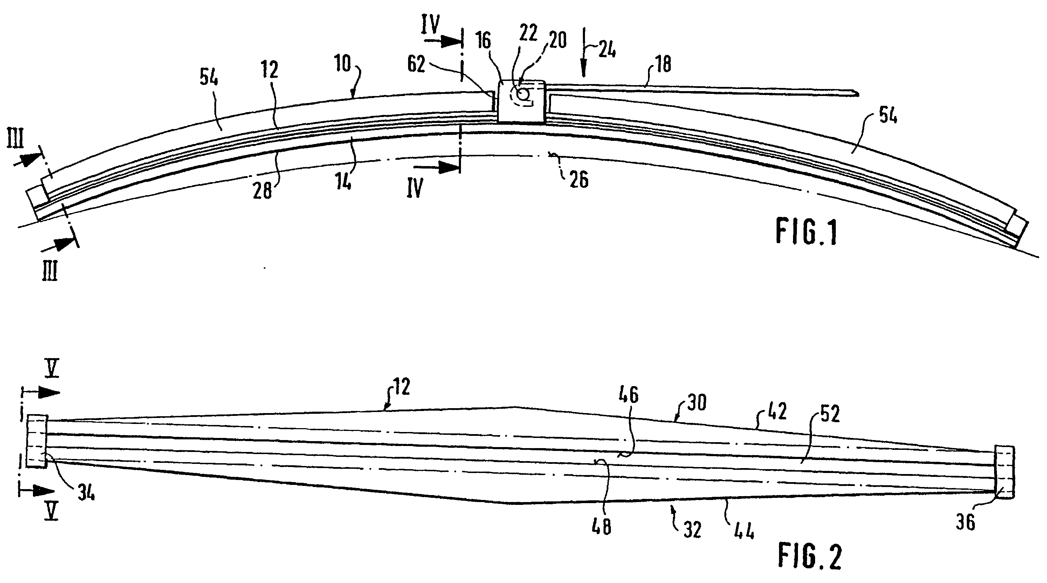

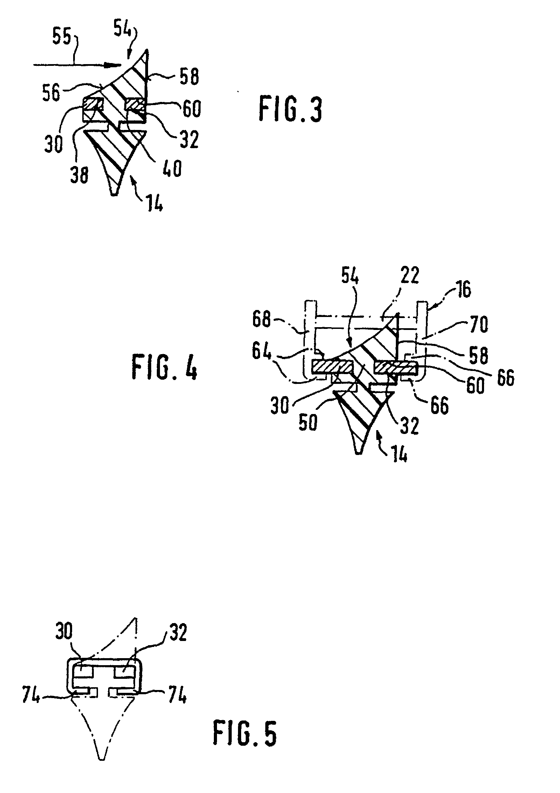

In der Zeichnung zeigen Figur 1 eine Seitenansicht eines erfindungsgemäßen Wischblatts, Figur 2 eine unmaßstäbliche Draufsicht auf ein zum Wischblatt gehörendes Tragelement, in das eine Windabweisleiste des Wischblatts strichpunktiert eingezeichnet ist, Figur 3 eine vergrößerte Schnittfläche des Wischblatts an der Linie III-III in Figur 1, Figur 4 eine vergrößerte Wischfläche des Wischblatts an der Linie IV-IV in Figur 1, wobei die Anschlußvorrichtung für den Wischerarm strichpunktiert eingezeichnet ist und Figur 5 eine vergrößerte Ansicht des Tragelements in Richtung des Pfeiles V in Figur 2, um 90° gedreht.

### Beschreibung des Ausführungsbeispiels

Ein in Figur 1 dargestelltes Wischblatt 10 weist ein mehrteiliges, langgestrecktes, federelastisches Tragelement 12 (Figur 2) auf, an dem eine langgestreckte, gummielastische Wischleiste 14 längsachsenparallel befestigt ist. An der Oberseite des Tragelements 12 ist eine Anschlußvorrichtung 16 angeordnet, mit deren Hilfe das Wischblatt 10 mit einem angetriebenen, an der Karosserie eines Kraftfahrzeugs geführten Wischerarm 18 lösbar verbunden werden kann. An dem freien Ende 20 des Wischerarms 18 ist ein als Gegenanschlußmittel dienender Haken angeformt, welcher einen zur Anschlußvorrichtung 16 des Wischblatts gehörenden Gelenkbolzen 22 umgreift. Die Sicherung zwischen dem Wischerarm 18 und dem Wischblatt 10 wird durch nicht näher dargestellte, an sich bekannte, als Adapter ausgebildete Sicherungsmittel übernommen. Der Wischerarm 18 und damit der Haken am Armende 20 ist in Richtung des Pfeiles 24 zur zu wischenden Scheibe belastet, deren zu wischende Oberfläche in Figur 1 durch eine strichpunktierte Linie 26 angedeutet ist. Da die strichpunktierte Linie 26 die stärkste Krümmung der Scheibenoberfläche darstellen soll, ist klar ersichtlich, daß die Krümmung des mit seinen beiden Enden an der Scheibe anliegenden Wischblatts stärker ist als die maximalen Scheibenkrümmung. Unter dem Anpreßdruck (Pfeil 24) legt sich das Wischblatt mit seiner Wischlippe 28 über seine gesamte Länge an der Scheibenoberfläche 26 an. Dabei baut sich im bandartigen, federelastischen Tragelement 12 eine Spannung auf, welche für eine ordnungsgemäße Anlage der Wischleiste 14 bzw. der Wischlippe 18 über deren gesamte Länge an der Kraftfahrzeugscheibe sorgt.

Aus Figur 2 ist ersichtlich, daß das dort in Draufsicht dargestellte Tragelement 12 aus mehreren Einzelteilen besteht. So weist es zwei Federschienen 30 und 32 auf, die beim Ausführungsbeispiel durch an den beiden Enden der einander benachbart angeordneten Federschienen plazierte, klammer- oder krallenartige Haltemittel 34 und 36 miteinander verbunden sind. Wie insbesondere die Figuren 3 und 4 zeigen, liegt jede der beiden Federschienen 30 und 32 in einer ihr zugeordneten Längsnut 38 bzw. 40 der Wischleiste 14, wobei die Nuten in einer gemeinsamen Ebene angeordnet sind und somit einander gegenüberliegen. Weiter zeigt Figur 2, daß beide Federschienen 30 und 32 in ihrem Mittelbereich breiter sind als in ihren Endbereichen, weil die beiden äußeren, voneinander abliegenden Längskanten 42, 44 entsprechend verlaufen. Die beiden einander zugewandten Innen-Längskanten 46, 48 sind jedoch parallel zueinander ausgerichtet. Diese Innen-Längskanten 46 und 48 liegen am Nutgrund der beiden Längsnuten 38 und 40 an. Da beim Ausführungsbeispiel die Tiefe der Nuten etwa der Breite der Federschienen 30 und 32 in deren Endbereichen entspricht, ragen die beiden Federschienen mit ihren äußeren Längskanten 42 und 44 zum Mittelabschnitt hin immer weiter aus den Längsnuten 38 und 40 (Figuren 2, 3 und 4).

Weiter zeigen die Figuren 3 und 4, daß sich die Wischleiste 14 mit einer durch die Längsnuten 38 und 40 bedingten Einschnürung 50 durch den zwischen den beiden Innen-Längskanten 46 und 48 verbleibenden Schlitz 52 (Figur 2) erstreckt und sich danach, auf der von der Scheibe abgewandten Seite des Tragelements 12, wieder verbreitert und mit einem im wesentlichen dreieckigen Querschnitt versehen ist, der als Windabweisleiste dient. Die eine, überwiegend dem Fahrtwind (Pfeil 55 in Figur 3) zugewandte Seitenfläche 56 der Windabweisleiste ist schaufelartig gekehlt. Die zweiten Seitenfläche 58 der Windabweisleiste ist im wesentlichen senkrecht zur Scheibe 26 ausgerichtet und die dritte Seitenfläche 60 der Windabweisleiste bildet die von der Scheibe abliegende Wand der beiden Längsnuten 38 und 40. Wie anhand der gestrichelten Linie in Figur 2 erkennbar ist, weist die Wischleiste 14 und die in diese integrierte Windabweisleiste 54 beim Ausführungsbeispiel einen gleichbleibenden Querschnitt auf. Ungeachtet dessen ist es aber auch denkbar, zumindest den Querschnitt der Windabweisleiste 54 über deren Längserstrekkung gesehen zu verändern. Der über die Länge gleichbleibende Querschnitt der Windabweisleiste 54 beim Ausführungsbeispiel schließt jedoch nicht aus, daß diese - wie aus Figur 1 ersichtlich - im Mittelbereich des Wischblatts 10 die Windabweisleiste 54 durch eine Aussparung 62 unterbrochen ist, die bis nahe an das Tragelement 12 heranführt. In dieser Aussparung 62 ist die Anschlußvorrichtung 16 für den Wischerarm 18 angeordnet. Dabei übergreift und untergreift die Anschlußvorrichtung 16 mit paarweise angeordneten Schenkeln 64 und 66 die Federschienen 30 und 32 und hält diese in ihrer vorschriftsmäßigen Position in den Längsnuten 38 und 40. Die Schenkel 64 und 66 befinden sich an Wangen 68 und 70 der Anschlußvorrichtung 16, welche durch den schon erwähnten Gelenkbolzen 22 miteinander verbunden sind. Die Anschlußvorrichtung 16 bildet also auch ein Haltemittel für die beiden Federschienen 30 und 32.

Damit die Federschienen 30 und 32 aber auch an ihren Endbereichen ordnungsgemäß in den Längsnuten 38 und 40 verbleiben, sind dort weitere, als Klammern 72 ausgebildete Haltemittel vorgesehen, welche mit Endkrallen 74 (Figur 5) die Federschienen an ihren voneinander abgewandten Längskanten 42 und 44 umgreifen. Die Figuren 1 und 2 zeigen, daß die Federschienen 30 und 32 mit ihren Endabschnitten aus den Längsnuten 38 und 40 heraustreten, weil die Windabweisleiste geringfügig kürzer ist als das Tragelement 12, sodaß an diesen Endabschnitten die Klammern 74 angreifen können. Bei entsprechend langen Wischblättern kann es zweckmäßig sein, weitere, über die Längserstreckung des Wischblatts verteilt angeordnete krallenartige Haltemittel anzuordnen, denen dann naturgemäß auch eine Aussparung zugeordnet sein muß, welche den Durchtritt dieser Klammern durch die Windabweisleiste 54 zulassen.

Aus vorstehendem ist klar ersichtlich, daß zum Tragelement 12 neben den beiden Federschienen 30 und 32 auch Haltemittel gehören, welche die Sicherung des Tragelements an der Wischleiste 14 gewährleisten. Die Anschlußvorrichtung 16 soll jedoch in erster Linie eine gelenkige Verbindung zwischen dem Wischerarm 18 und dem Wischblatt 10 ermöglichen. Darüber hinaus übernimmt die Anschlußvorrichtung 16, wie schon dargelegt, auch noch eine zusätzliche Funktion, nämlich die Sicherung der Federschiene 30 und 32 in deren Mittelbereich.

Die Wischleiste 14 kann mit Rücksicht auf die verschiedenen Aufgaben, welche von der Wischlippe 28 bzw. der Windabweisleiste 54 übernommen werden müssen; beispielsweise mit Hilfe der sogenannten Mehrstoffextrusion hergestellt werden.

Anstelle der separaten Haltemittel 34 und 36 an den Enden der Federschienen 30 und 32 ist es auch denkbar, diese Haltemittel als einstückig mit der einen oder auch mit beiden Federschienen verbundenen, sich zur anderen Federschiene erstreckenden Querschenkel auszubilden, deren freie Enden zu Krallen gebogen diese andere Federschiene umgreifen. Es sind aber auch andere Formen der Befestigung - Kleben, Schweißen etc. - möglich.

## Patentansprüche

1. Wischblatt (10) zum Reinigen von Scheiben an Kraftfahrzeugen mit einer an der Scheibe anlegbaren, langgestreckten, gummielastischen Wischleiste (14), die an ihren beiden Längsseiten mit jeweils einander gegenüberliegenden Längsnuten (38, 40) versehen ist, in denen je eine abschnittsweise mit der einen Längskante (42, 44) aus den Nuten ragende Federschiene (30, 32) angeordnet ist, wobei die Federschienen zu einem langgestreckten, federelastischen Tragelement (12) für die Wischleiste (14) gehören an deren Mittelabschnitt eine Anschlußvorrichtung (16) für einen an der Fahrzeugkarosserie geführten Wischerarm (18) angeordnet ist, **dadurch gekennzeichnet, daß** zumindest ein Längsabschnitt des auf der von der Scheibe abgewandten Seite der Federschienen (30, 32) befindlichen Teils der Wischleiste als Windabweisleiste (54) ausgebildet ist und daß an den aus den Längsnuten (38, 40) ragenden Längskanten (42, 44) der Federschienen (30, 32) die Anschlußvorrichtung (16) gehalten ist.

2. Wischblatt nach Anspruch 1, **dadurch gekennzeichnet, daß** die Windabweisleiste (54) in ihrer Längserstreckung bis nahe an die Längsnuten (38, 40) reichende Aussparung (62) aufweist, welche zur Aufnahme von quer zur Längserstreckung angeordneten Haltemitteln für die beiden Federschienen dient.

3. Wischblatt nach einem der Ansprüche 1 oder 2, **dadurch gekennzeichnet, daß** der als Windabweisleiste (54) ausgebildete Teil der Wischleiste (14) einen im wesentlichen dreieckigen Querschnitt hat, dessen überwiegend dem Fahrtwind (Pfeil 55) zugewandte Seite (56) schaufelartig gekehlt ist.

4. Wischblatt nach Anspruch 3, **dadurch gekennzeichnet, daß** die zweite Seite (58) der Windabweisleiste (54) im wesentlichen senkrecht zur Scheibe ausgerichtet ist und daß dessen dritte Seite (60) die eine von der Scheibe abliegende Nutwand bildet.

5. Wischblatt nach einem der Ansprüche 1 bis 4, **dadurch gekennzeichnet, daß** die Wischleiste (14) im wesentlichen über ihre gesamte Längserstreckung einen gleichbleibenden Querschnitt aufweist.

6. Wischblatt nach einem der Ansprüche 2 bis 5, **dadurch gekennzeichnet, daß** an den zum Tragelement (12) gehörenden Federschienen (30, 32) mehrere, über deren Längserstreckung verteilt angeordnete Haltemittel (34, 36) angreifen.

7. Wischblatt nach einem der Ansprüche 2 bis 6, **dadurch gekennzeichnet, daß** die Anschlußvorrichtung (16) als Haltemittel für die beiden Federschienen (30, 32) ausgebildet ist.

8. Wischblatt nach Anspruch 6, **dadurch gekennzeichnet, daß** die weiteren Haltemittel (34, 36) als Klammern (72) ausgebildet sind, welche mit Endkrallen (74) die Federschienen (30, 32) an deren voneinander abgewandten Längskanten (42, 44) umgreifen.

9. Wischblatt nach einem der Ansprüche 1 bis 8, **dadurch gekennzeichnet, daß** die Federschienen (32) mit ihren Endabschnitten freiliegen und daß an diesen Endabschnitten klammerartige Haltemittel (34, 36) angreifen.

## Claims

1. Wiper blade (10) for cleaning windows of motor vehicles, having an elongate, elastomeric wiper strip (14) which can be placed against the window and is provided on its two longitudinal sides with respective, mutually opposite longitudinal grooves (38, 40) in which a respective spring rail (30, 32) is provided, which protrudes partially with the one longitudinal edge (42, 44) out of the grooves, the spring rails belonging to an elongate, resilient supporting element (12) for the wiper strip (14) on whose central section is arranged a connecting device (16) for a wiper arm (18) guided on the vehicle bodywork, **characterized in that** at least one longitudinal section of the part of the wiper strip which is situated on that side of the spring rails (30, 32) which faces away from the window is designed as a wind-deflecting strip (54), and **in that** the connecting device (16) is held on those longitudinal edges (42, 44) of the spring rails (30, 32) which protrude out of the longitudinal grooves (38, 40).

2. Wiper blade according to Claim 1, **characterized in that** the wind-deflecting strip (54) has, in its longitudinal extent, a cut-out (62) which extends virtually as far as the longitudinal grooves (38, 40) and serves for receiving retaining means, which are arranged transversely to the longitudinal extent, for the two spring rails.

3. Wiper blade according to either of Claims 1 and 2, **characterized in that** that part of the wiper strip (14) which is designed as a wind-deflecting strip (54) has an essentially triangular cross section whose side (56) which predominantly faces the head wind (arrow 55) is moulded in a shovel-like manner.

4. Wiper blade according to Claim 3, **characterized in that** the second side (58) of the wind-deflecting strip (54) is orientated essentially perpendicularly with respect to the window, and **in that** its third side (60) forms the one groove wall situated away from the window.

5. Wiper blade according to one of Claims 1 to 4, **characterized in that** the wiper strip (14) has a constant cross section essentially over its entire longitudinal extent.

6. Wiper blade according to one of Claims 2 to 5, **characterized in that** a plurality of retaining means (34, 36), which are distributed over the longitudinal extent of the spring rails, act on the spring rails (30, 32), which belong to the supporting element (12).

7. Wiper blade according to one of Claims 2 to 6, **characterized in that** the connecting device (16) is designed as retaining means for the two spring rails (30, 32).

8. Wiper blade according to Claim 6, **characterized in that** the first retaining means (34, 36) are designed as clips (72) which engage with end claws (74) around the spring rails (30, 32) on their mutually remote longitudinal edges (42, 44).

9. Wiper blade according to one of Claims 1 to 8, **characterized in that** the spring rails (32) are exposed at their end sections, and **in that** clip-like retaining means (34, 36) act on these end sections.

## Revendications

1. Essuie-glace (10) destiné au nettoyage de vitres de véhicules automobiles avec une bande de balayage (14) allongée, en caoutchouc élastique, qu'on peut appliquer sur la vitre, qui sur ses deux grands côtés est munie de rainures longitudinales (38, 40) à chaque fois opposées l'une à l'autre, dans chacune desquelles rainures est placé par segments un rail élastique (30, 32) faisant saillie sur les rainures avec l'une des arêtes longitudinales (42, 44), les rails élastiques appartenant à un élément de support (12), allongé et élastique, pour la bande de balayage (14), sur le segment médian duquel est placé un dispositif de raccordement (16) pour un bras de balayage (18) guidé sur la carrosserie de véhicule,
**caractérisé en ce qu'**
au moins un segment longitudinal de la partie, placée du côté détourné de la vitre des rails élastiques (30, 32), de la bande de balayage est formé en tant que déflecteur de vent (54), et le dispositif de raccordement (16) est maintenu sur les arêtes longitudinales (42, 44), en saillie sur les rainures longitudinales (38, 40), des rails élastiques (30, 32).

2. Essuie-glace selon la revendication 1,
**caractérisé en ce que**
le déflecteur de vent (54) présente dans son étendue longitudinale un évidement (62) s'étendant jusqu'à proximité des rainures longitudinales (38, 40) qui sert à recevoir des moyens de maintien, placés transversalement par rapport à l'étendue longitudinale, pour les deux rails élastiques.

3. Essuie-glace selon l'une des revendications 1 ou 2,
**caractérisé en ce que**
la partie de la bande de balayage (14) formée en tant que déflecteur de vent (54) a une section transversale pratiquement triangulaire dont le côté (56) principalement tourné vers le vent relatif (flèche 55) est évidé en forme de pelle.

4. Essuie-glace selon la revendication 3,
**caractérisé en ce que**
le deuxième côté (58) du déflecteur de vent (54) est disposé pratiquement à la verticale de la vitre et le troisième côté (60) forme une paroi cannelée détournée de la vitre.

5. Essuie-glace selon l'une des revendications 1 à 4,
**caractérisé en ce que**
la bande de balayage (14) présente une section transversale constante pratiquement sur toute son étendue longitudinale.

6. Essuie-glace selon l'une des revendications 2 à 5,
**caractérisé en ce que**
plusieurs moyens de maintien (34, 36) placés régulièrement sur leur étendue longitudinale agrippent les rails élastiques (30, 32) qui font partie de l'élément de support (12).

7. Essuie-glace selon l'une des revendications 2 à 6,
**caractérisé en ce que**
le dispositif de raccordement (16) est formé en tant que moyen de maintien pour les deux rails élastiques (30, 32)

8. Essuie-glace selon la revendication 6,
**caractérisé en ce que**
les autres moyens de maintien (34, 36) sont formés en tant que crampons (72) qui avec leurs griffes terminales (74) enveloppent les rails élastiques (30, 32) sur leurs arêtes longitudinales (42, 44) détournées l'une de l'autre.

9. Essuie-glace selon l'une des revendications 1 à 8,
**caractérisé en ce que**
les rails élastiques (32) restent libres sur leurs segments terminaux et des moyens de maintien (34, 36) de type crampon agrippent ces segments terminaux.
